# EUROPEAN PATENT APPLICATION

(11) **EP 2 785 031 A1**
(43) Date of publication of application: **01.10.2014**
(21) Application number: 12867355.5
(22) Date of filing: 28.07.2012
(51) Int. Cl.: H04M 7/00, H04M 7/12

(54) **METHOD AND DEVICE FOR CONTROLLING USER CALL**

(30) Priority: 02.02.2012 CN 201210023434
(71) Applicant: Huawei Technologies Co., Ltd., Shenzhen, Guangdong 518129 (CN)
(72) Inventor: YAN, Xiaojun, Shenzhen Guangdong 518129 (CN); ZHU, Jiang, Shenzhen Guangdong 518129 (CN)
(74) Representative: Goddar, Heinz J.
(86) International application number: PCT/CN2012/079310
(87) International publication number: WO 2013/113213

(57) **Abstract**

The present invention discloses a method and a device for controlling a user call, relates to the field of communications, and is applied to controlling long-distance calls of external-line users of Voice over Internet Protocol. The present invention overcomes defects of high costs and complex operations caused by using another device to control an external-line user to make a long-distance call by using an internal VoIP system, and implements long-distance call control with a high efficiency, a high speed, and a low cost. The method for controlling a user call provided in the embodiments of the present invention comprises: receiving a call request of a first external-line user, where the call request includes a telephone number of the first external-line user and a telephone number of a called party; when the telephone number of the called party is a long-distance telephone number, querying a permission relationship table, where the permission relationship table includes internal-line numbers and numbers of external-line users with long-distance call permission; and if the telephone number of the first external-line user is in the permission relationship table, connecting the call of the first external-line user.

## Description

### TECHNICAL FIELD

The present invention relates to the field of communications, and in particular, to a method and a device for controlling a user call.

### BACKGROUND

Voice over Internet Protocol (Voice over Internet Protocol, VoIP for short) digitalizes an analog voice signal and transmits it in a form of a data packet in real time over an IP data network. The VoIP technology enables transmission of voice over a network, and this can save a lot of long-distance communication costs for enterprises, especially transnational enterprises or other enterprises having a lot of branches.

For a conventional VoIP-based enterprise, only internal-line numbers can use a VoIP network of the enterprise. In order to allow external-line users to use the internal VoIP network of the enterprise in a controlled manner, external-line numbers, for example, mobile numbers, of the external-line users need to be registered in an enterprise contacts server. A specific control process is as follows:
receiving a call forwarding request from an external-line user,
querying the enterprise contacts server by using the Lightweight Directory Access Protocol (Lightweight Directory Access Protocol, LADP for short), and if an external-line number of the external-line user is in the enterprise contacts server, forwarding the call.

During implementation of the foregoing process of controlling an external-line user to make a long-distance call by using an internal VoIP system, the inventor finds that at least the following two problems exits: the foregoing process can only be implemented by supporting the LDAP protocol and using an enterprise contacts server, and use of an Radius server leads to such defects as an increase in costs of control devices and complex operations.

### SUMMARY

Embodiments of the present invention provide a method and a device for controlling a user call, which overcome defects of high costs and complex operations caused by using another device to control an external-line user to make a long-distance call by using an internal VoIP system, and implement long-distance call control with a high efficiency, a high speed, and a low cost.

To achieve the foregoing objective, the embodiments of the present invention adopt the following technical solutions:
In one aspect, an embodiment of the present invention provides a method for controlling a user call, including:
   receiving a call request of a first external-line user, where the call request includes a telephone number of the first external-line user and a telephone number of a called party;
   when the telephone number of the called party is a long-distance telephone number, querying a permission relationship table, where the permission relationship table includes internal-line numbers and numbers of external-line users with long-distance call permission; and
   if the telephone number of the first external-line user is in the permission relationship table, connecting the call of the first external-line user.

In another aspect, an embodiment of the present invention further provides a device for controlling a user call, including:
a receiving module, configured to receive a call request of a first external-line user, where the call request includes a telephone number of the first external-line user and a telephone number of a called party;
a determining module, configured to determine whether the telephone number of the called party is a long-distance telephone number;
a querying module, configured to query, if the determining module determines that the telephone number of the called party is a long-distance telephone number, a permission relationship table, where the permission relationship table includes internal-line numbers and numbers of external-line users with long-distance call permission; and
an executing module, configured to connect the call of the first external-line user if the querying module determines that the telephone number of the first external-line user is in the permission relationship table.

According to the method and the device for controlling a user call provided in the embodiments of the present invention, after a call request of a first external-line user is received and it is determined that a telephone number of a called party corresponding to the call request is a long-distance telephone number, the long-distance call of the first external-line user is controlled by querying a permission relationship table. Thereby, an external-line user can be controlled to make a domestic or an international long-distance call by using VoIP without use of another device. This overcomes defects of high costs and complex operations caused by using another device to control an external-line user to make a long-distance call by using an internal VoIP system, and implements long-distance call control with a high efficiency, a high speed, and a low cost.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for controlling user call permission according to an embodiment of the present invention;
FIG. 2 is a flowchart of another method for controlling user call permission according to an embodiment of the present invention;
FIG. 3 is a structural diagram of a device for controlling user call permission according to an embodiment of the present invention;
FIG. 4 is a structural diagram of another device for controlling user call permission according to an embodiment of the present invention; and
FIG. 5 is a schematic diagram of a network scenario for controlling user call permission according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

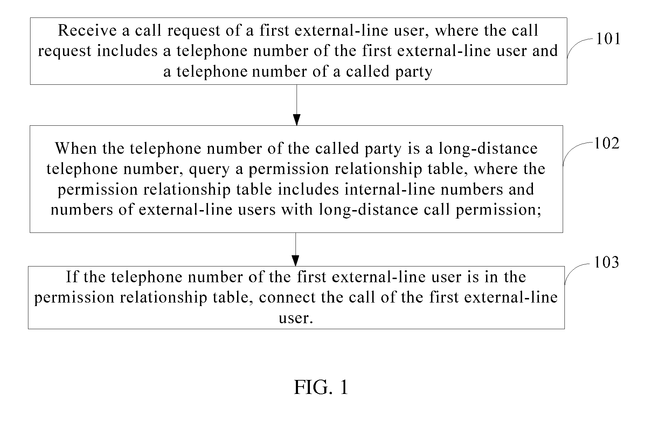

The embodiments of the present invention adopt the following technical solutions: In one aspect, an embodiment of the present invention provides a method for controlling a user call. Referring to FIG. 1, the method includes:
101: Receive a call request of a first external-line user, where the call request includes a telephone number of the first external-line user and a telephone number of a called party;
102: When the telephone number of the called party is a long-distance telephone number, query a permission relationship table, where the permission relationship table includes internal-line numbers and numbers of external-line users with long-distance call permission.
103: If the telephone number of the first external-line user is in the permission relationship table, connect the call of the first external-line user.

Exemplarily, the connecting the call of the first external-line user may include:
querying, by a telephone switching device according to the telephone number of the called party, address information of the called party,
calling, by the telephone switching device by using an Internet Protocol IP network, a telephone switching device on a side of the called party, and sending the address information of the called party; and
calling, by the telephone switching device on the side of the called party according to the address information of the called party, the called party to connect the call of the first external-line user.

According to the method for controlling a user call provided in the embodiment of the present invention, after a call request of a first external-line user is received and it is determined that a telephone number of a called party corresponding to the call request is a long-distance telephone number, the long-distance call of the first external-line user is controlled by querying a permission relationship table. Thereby, an external-line user can be controlled to make a domestic or an international long-distance call by using VoIP without use of another device. This overcomes defects of high costs and complex operations caused by using another device to control an external-line user to make a long-distance call by using an internal VoIP system, and implements long-distance call control with a high efficiency, a high speed, and a low cost.

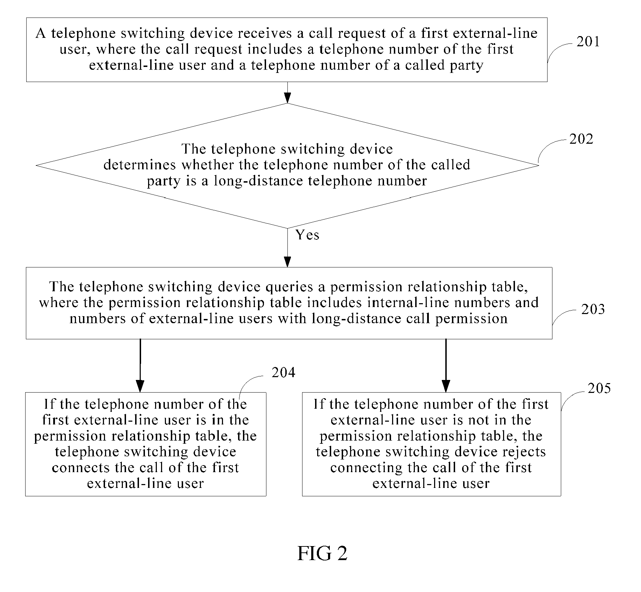

An embodiment of the present invention provides another method for controlling a user call. Referring to FIG. 2, the method includes:
201: A telephone switching device receives a call request of a first external-line user, where the call request includes a telephone number of the first external-line user and a telephone number of a called party.

The telephone switching device may be an Internet Protocol (Internet Protocol, IP for short) private branch exchange (Private Branch Exchange, PBX for short).

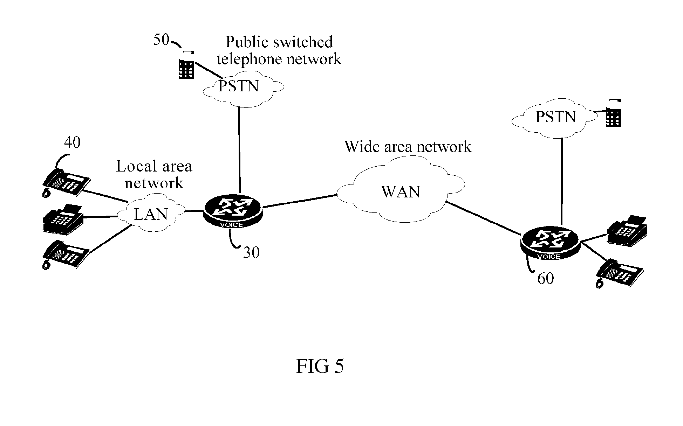

Specifically, the telephone switching device receives the call request of the first external-line user, where the telephone switching device can totally integrate voice communications into a data network. Referring to FIG. 5, a telephone switching device 30 may be connected to a plurality of first terminals 40 by using a local area network (Local Area Network, LAN for short). The first terminals 40 may be software telephones or hardware telephones. A software telephone means that software is downloaded to a computer for talking to a peer (a fixed-line telephone or a mobile phone) by using a headset; and a hardware telephone refers to a common telephone that is connected by using a voice gateway.

All the first terminals 40 that are connected to the telephone switching device 30 by using the LAN are internal-line users of the telephone switching device. Correspondingly, numbers of all the internal-line users of the telephone switching device 30 are called internal-line numbers of the telephone switching device 30 and are stored in the telephone switching device 30.

All other terminals except the first terminals 40 that are connected to the telephone switching device 30 by using the LAN are external-line users of the telephone switching device 30, and correspondingly, numbers of all the external-line users of the telephone switching device 30 are called external-line numbers of the telephone switching device 30. For example, a second terminal 50 that is connected to the telephone switching device 30 by using a public switched telephone network (Public Switched Telephone Network, PSTN for short) is an external-line user, where a telephone number of the second terminal 50 is an external-line number, and the second terminal 50 may be a mobile phone or a fixed-line telephone.

202: The telephone switching device determines whether the telephone number of the called party is a long-distance telephone number.

The telephone switching device may determine, according to a preset prefix, whether the telephone number of the called party is a domestic long-distance telephone number or an international long-distance telephone number. For example, it may be set that the telephone number of the called party with a prefix "0" is a domestic long-distance telephone number, and the telephone number of the called party with a prefix "00" is an international long-distance telephone number. The present invention does not limit how a long-distance telephone number is determined.

203: If it is determined that the telephone number of the called party is a long-distance telephone number, the telephone switching device queries a permission relationship table, where the permission relationship table includes internal-line numbers and numbers of external-line users with long-distance call permission.

Exemplarily, the permission relationship table may be formed by internal-line numbers and attribute values corresponding to the internal-line numbers. The attribute values of the internal-line numbers include numbers of external-line users with long-distance call permission, and may also be blank or other numbers. If an attribute value of a certain internal-line number is a telephone number of a corresponding external-line user, the internal-line number and the external-line number are bound and have same long-distance call permission.

Specifically, configuring the permission relationship table may include:
storing, by the telephone switching device, internal-line numbers and numbers of external-line users with long-distance call permission of the telephone switching device in the permission relationship table,
where, exemplarily, a telephone number of each external-line user with long-distance call permission corresponds to a certain internal-line number; for example, an internal-line number and an external-line number may be set to correspond to each other by a staff member, and a correspondence exists in the permission relationship table between an internal-line number of a certain staff member and an external-line number of the staff member; and
binding, by the telephone switching device, an internal-line number and an external-line number that are in a correspondence and setting for them same long-distance call permission.

Referring to Table 1, the permission relationship table may be stored in the telephone switching device in a form of a file, with each internal-line number in the file followed by an attribute value. If an attribute value following a certain internal-line number is set to an external-line number, the external-line number has long-distance call permission. There may be more than one such external-line number, each of which may be a mobile phone or a fixed-line telephone. If an attribute value following a certain internal-line number is set to be blank or else, it means that the attribute value has no long-distance call permission.

**Table 1**

| **Internal-line number** | **Attribute** |
|---|---|
| 6001 | 123456 |
| 6002 | |
| 6003 | |
| 6004 | 789456 |
| 6005 | |

When an external-line user with long-distance call permission needs to be added, it is only necessary to set an external-line number of the external-line user to an attribute value of the corresponding internal-line number; and when an external-line user with long-distance call permission needs to be deleted, it is only necessary to delete the external-line number.

Certainly, the permission relationship table may be expressed and stored in other forms so long as a correspondence between internal-line numbers and external-line numbers with long-distance call permission can be satisfied. Then, according to the permission relationship table, the telephone switching device binds corresponding internal-line numbers and external-line numbers in advance and sets for them same long-distance call permission. This embodiment does not limit the specific form of the permission relationship table.

If it is determined that the telephone number of the called party of the call request is a long-distance telephone number, the telephone switching device queries whether the external-line number of the call request is in the permission relationship table.

204: If the telephone number of the first external-line user is in the permission relationship table, the telephone switching device connects the call of the first external-line user.

Referring to Table 1, the foregoing permission relationship table that includes internal-line numbers and attribute values of the internal-line numbers is used as an example for description. That is, it is queried whether the external-line number of the call request is set to an attribute value of an internal-line number.

An external-line user with a number 123456 is used as an example for description. After it is determined that the called number is an international long-distance telephone number or a domestic long-distance telephone number, the file storing the internal-line numbers is queried by using the number 123456 of the external-line user to find that the external-line number 123456 is an attribute value of an internal-line number 6001. This means that the number 123456 of the external-line user and the internal-line number 6001 have been bound and have same long-distance call permission, so the telephone switching device connects the call of the external-line number 123456.

Alternatively, if the telephone number of the called party of the call request is not a long-distance telephone number, it is queried whether the telephone number of the called party is an internal-line number. If the telephone number of the called party is an internal-line number, the call of the external-line number 123456 is connected; and if the telephone number of the called party is not an internal-line number, the call of the external-line number 123456 is rejected.

Here, a specific process of connecting the call of the external-line number 123456 is as follows:
the telephone switching device queries IP address information of the called party according to the telephone number of the called party;
the telephone switching device calls, by using an IP network, a telephone switching device on a side of the called party, and sends the IP address information of the called party to the telephone switching device on the side of the called party; and the telephone switching device on the side of the called party calls the called party according to the IP address information of the called party so that the call is connected after the called party answers.

As shown in FIG. 5, for example, the second terminal 50 initiates a call to the called party by using the telephone switching device 30, where the telephone number of the called party is a long-distance telephone number, and the telephone number of the second terminal 50 is in the permission relationship table. Then, the telephone switching device 30 queries IP address information of the called party according to the telephone number of the called party, calls a telephone switching device 60 on a side of the called party by using the IP network, and sends the IP address information of the called party to the telephone switching device 60 on the side of the called party; and the telephone switching device 60 on the side of the called party calls the called party according to the IP address information of the called party so that the call is connected after the called party answers.

205: If the telephone number of the first external-line user is not in the permission relationship table, the telephone switching device rejects connecting the call of the first external-line user.

It is assumed that the external-line number is 321654. Then, if the telephone switching device determines that the external-line number 321654 is not an attribute value of an internal-line number by querying the preset corresponding permission relationship table, the call of the external-line number 321654 is rejected. According to the method for controlling a user call provided in the embodiment of the present invention, after a call request of a first external-line user is received and it is determined that a telephone number of a called party corresponding to the call request is a long-distance telephone number, the long-distance call of the first external-line user is controlled by querying a permission relationship table. Thereby, an external-line user can be controlled to make a domestic or an international long-distance call by using VoIP without use of another device. This overcomes defects of high costs and complex operations caused by using another device to control an external-line user to make a long-distance call by using an internal VoIP system, and implements long-distance call control with a high efficiency, a high speed, and a low cost.

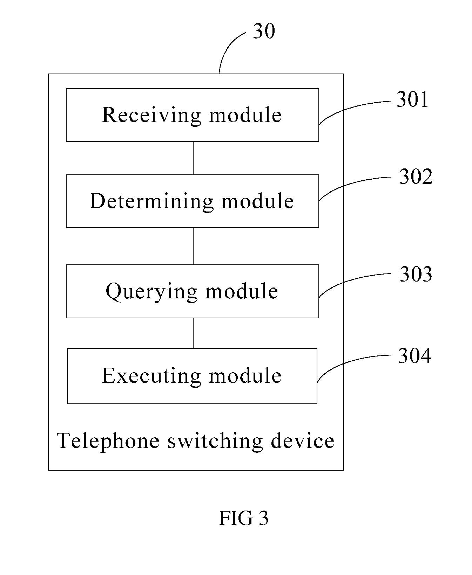

An embodiment of the present invention further provides a device for controlling a user call, which is configured to implement the method shown in FIG. 1 and FIG. 2. Referring to FIG. 3, the device includes a receiving module 301, a determining module 302, a querying module 303, and an executing module 304.

The receiving module 301 is configured to receive a call request of a first external-line user, where the call request includes a telephone number of the first external-line user and a telephone number of a called party.

Usually the device is deployed in a telephone switching device, for example, the telephone switching devices 30 and 60 shown in FIG. 5. The telephone switching device may be an IP PBX.

Exemplarily, referring to FIG. 5, the telephone switching device 30 may be connected to a plurality of first terminals 40 by using a local area network (Local Area Network, LAN for short). The first terminals 40 may be software telephones or hardware telephones. A software telephone means that software is downloaded to a computer for talking to a peer (a fixed-line telephone or a mobile phone) by using a headset; and a hardware telephone refers to a common telephone that is connected by using a voice gateway.

All first terminals 40 that are connected to the telephone switching device 30 by using the LAN are internal-line users of the telephone switching device. Correspondingly, numbers of all the internal-line users of the telephone switching device 30 are called internal-line numbers of the telephone switching device 30 and are stored in the telephone switching device 30.

All other terminals except the first terminals 40 that are connected to the telephone switching device 30 by using the LAN are external-line users of the telephone switching device 30, and numbers of the external-line users are called external-line numbers.

The determining module 302 is configured to determine whether the telephone number of the called party is a long-distance telephone number.

Exemplarily, the determining module 302 may determine whether the telephone number of the called party is a domestic long-distance telephone number or an international long-distance telephone number according to a preset prefix. For example, it may be set that the telephone number of the call party with a prefix "0" is a domestic long-distance telephone number, and the telephone number of the called party with a prefix "00" is an international long-distance telephone number. The present invention does not limit how a long-distance telephone number is determined.

The querying module 303 is configured to query, if the determining module 302 determines that the telephone number of the called party is a long-distance telephone number, a permission relationship table, where the permission relationship table includes internal-line numbers and numbers of external-line users with long-distance call permission.

Exemplarily, the permission relationship table may be formed by internal-line numbers and attribute values corresponding to the internal-line numbers. The attribute values of the internal-line numbers include numbers of external-line users with long-distance call permission, and may also be blank or other numbers. If an attribute value of a certain internal-line number is a telephone number of a corresponding external-line user, the internal-line number and the external-line number are bound and have same long-distance call permission.

The executing module 304 is configured to connect the call of the first external-line user if the querying module 303 determines that the telephone number of the first external-line user is in the permission relationship table.

Alternatively, the device may further include a storage module configured to store the permission relationship table. The permission relationship table includes internal-line numbers and attribute values corresponding to the internal-line numbers, where the attribute values of the internal-line numbers include numbers of external-line users with long-distance call permission.

Referring to Table 1, the permission relationship table may be stored in the telephone switching device 30 in a form of a file, with each internal-line number in the file followed by an attribute value. If an attribute value following a certain internal-line number is set to an external-line number, the external-line number has long-distance call permission. There may be more than one such external-line number, each of which may be a mobile phone or a fixed-line telephone. If an attribute value following a certain internal-line number is set to be blank or else, it means that the attribute value has no long-distance call permission.

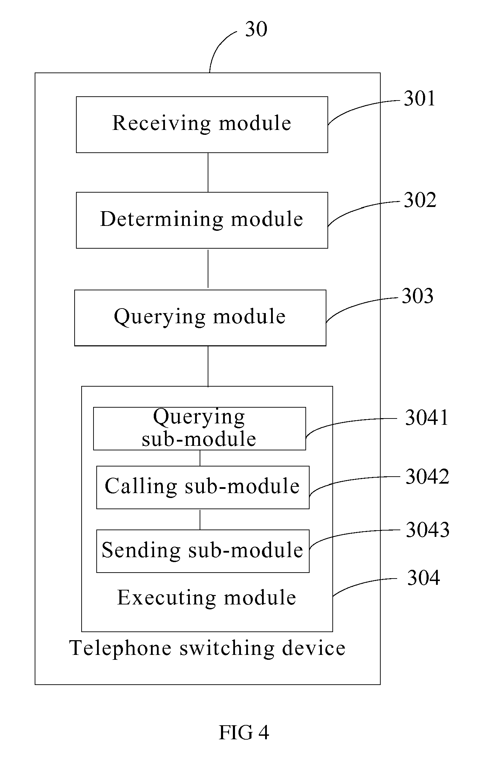

Further, referring to FIG. 4, the executing module 304 may specifically include a querying sub-module 3041, a calling sub-module 3042, and a sending sub-module 3043, where:
the querying sub-module 3041 is configured to query address information of the called party according to the telephone number of the called party;
the calling sub-module 3042 is configured to call, by using an IP network, a telephone switching device on a side of the called party; and
the sending sub-module 3043 is configured to send the address information of the called party so that the telephone switching device on the side of the called party calls the called party according to the address information of the called party to connect the call of the first external-line user.

The executing module 304 may be further configured to reject connecting the call of the first external-line user if the querying module determines that the telephone number of the first external-line user is not in the permission relationship table. According to the device for controlling a user call provided in the embodiment of the present invention, after a call request of a first external-line user is received and it is determined that a telephone number of a called party corresponding to the call request is a long-distance telephone number, the long-distance call of the first external-line user is controlled by querying a permission relationship table. Thereby, an external-line user can be controlled to make a domestic or an international long-distance call by using VoIP without use of another device. This overcomes defects of high costs and complex operations caused by using another device to control an external-line user to make a long-distance call by using an internal VoIP system, and implements long-distance call control with a high efficiency, a high speed, and a low cost.

A person of ordinary skill in the art can understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling a user call, comprising:
receiving a call request of a first external-line user, wherein the call request comprises a telephone number of the first external-line user and a telephone number of a called party;
when the telephone number of the called party is a long-distance telephone number, querying a permission relationship table, wherein the permission relationship table comprises internal-line numbers and numbers of external-line users with long-distance call permission; and
if the telephone number of the first external-line user is in the permission relationship table, connecting the call of the first external-line user.

2. The method for controlling a user call according to claim 1, wherein the permission relationship table comprises internal-line numbers and attribute values corresponding to the internal-line numbers, wherein the attribute values of the internal-line numbers comprise numbers of external-line users with long-distance call permission.

3. The method for controlling a user call according to claim 1 or 2, wherein the connecting the call of the first external-line user specifically comprises:
querying address information of the called party according to the telephone number of the called party;
calling, by using an Internet Protocol IP network, a telephone switching device on a side of the called party, and sending the address information of the called party; and
calling, by the telephone switching device on the side of the called party according to the address information of the called party, the called party to connect the call of the first external-line user.

4. The method for controlling a user call according to any one of claims 1 to 3, further comprising:
rejecting connecting the call of the first external-line user if the telephone number of the first external-line user is not in the permission relationship table.

5. A device for controlling a user call, comprising:
a receiving module, configured to receive a call request of a first external-line user, wherein the call request comprises a telephone number of the first external-line user and a telephone number of a called party;
a determining module, configured to determine whether the telephone number of the called party is a long-distance telephone number;
a querying module, configured to query, if the determining module determines that the telephone number of the called party is a long-distance telephone number, a permission relationship table, wherein the permission relationship table comprises internal-line numbers and numbers of external-line users with long-distance call permission; and
an executing module, configured to connect the call of the first external-line user if the querying module determines that the telephone number of the first external-line user is in the permission relationship table.

6. The device for controlling a user call according to claim 5, wherein the device further comprises a storage module, configured to store the permission relationship table, wherein the permission relationship table comprises internal-line numbers and attribute values corresponding to the internal-line numbers, wherein the attribute values of the internal-line numbers comprise numbers of external-line users with long-distance call permission.

7. The device for controlling a user call according to claim 5 or 6, wherein the executing module comprises a querying sub-module, a calling sub-module, and a sending sub-module, wherein:
the querying sub-module is configured to query address information of the called party according to the telephone number of the called party;
the calling sub-module is configured to call, by using an Internet Protocol IP network, a telephone switching device on a side of the called party; and
the sending sub-module is configured to send the address information of the called party, so that the telephone switching device on the side of the called party calls the called party according to the address information of the called party to connect the call of the first external-line user.

8. The device for controlling a user call according to any one of claims 5 to 7, wherein the executing module is further configured to reject connecting the call of the first external-line user if the querying module determines that the telephone number of the first external-line user is not in the permission relationship table.
